# EUROPÄISCHE PATENTSCHRIFT

(11) **EP 1 081 408 B1**
(45) Veröffentlichungstag und Bekanntmachung des Hinweises auf die Patenterteilung: **16.07.2003**
(21) Anmeldenummer: 99117008.5
(22) Anmeldetag: 28.08.1999
(51) Int. Cl.: F16F 9/48, F16F 9/49

(54) **Fluidischer Stossdämpfer**
Fluid damper
Amortisseur de chocs à fluide

(43) Veröffentlichungstag der Anmeldung: 07.03.2001
(73) Patentinhaber: Schnetz, Albert, 81379 München (DE)
(72) Erfinder: Schnetz, Rainer, Dipl.-Ing., 81379 München (DE)
(74) Vertreter: Reimold, Otto, Dipl.-Phys.Dr.

(56) Entgegenhaltungen:
- EP-A- 0 360 631
- EP-A- 0 386 433
- EP-A- 0 436 461
- DE-C- 920 534
- FR-A- 1 527 463
- FR-A- 2 079 874
- US-A- 4 452 437

## Beschreibung

Die Erfindung betrifft einen fluidischen Stoßdämpfer, mit einer in einem Stoßdämpfergehäuse in einer Bewegungsrichtung hin und her verschiebbar geführten Bewegungseinheit, die einen Dämpfungskolben aufweist, der einen Dämpfungsraum im Gehäuse begrenzt, wobei die Bewegungseinheit eine einerseits in den Dämpfungsraum mündende und andererseits mit der Kolbenrückseite verbundene Drosselöffnung bildet, der ein gehäusefester Drosselstift zugeordnet ist, der sich vom dem Dämpfungskolben entgegengesetzten Ende des Dämpfungsraums her in Bewegungsrichtung erstreckt, so daß sich beim Dämpfungsvorgang die Bewegungseinheit mit ihrer Drosselöffnung auf dem Drosselstift vorbewegt und ein bei der Vorbewegung verringernder Drosselquerschnitt ergibt.

Ein solcher Stoßdämpfer dient zum Abbremsen einer bewegten Masse, die je nach dem, ob das Stoßdämpfergehäuse oder die Bewegungseinheit ortsfest fixiert ist, auf eine an der Bewegungseinheit oder am Gehäuse angeordnete Stoßaufnahmefläche trifft, so daß eine Relativbewegung zwischen der Bewegungseinheit und dem Gehäuse auftritt. Hierbei wird das insbesondere von einem Hydraulikmedium gebildete Fluid aus dem Dämpfungsraum durch den Drosselquerschnitt hindurch verdrängt.

Bei einem aus der DE 39 07 355 C2 bekannten Stoßdämpfer der genannten Art weist der Drosselstift - sieht man von einer kegelig zulaufenden Endpartie ab - eine zylindrische Gestalt und die Drosselöffnung eine sich von ihrer Mündung aus konisch verjüngende Mantelfläche auf. Bei dieser Anordnung baut sich gleich zu Beginn des Dämpfungsvorgangs sehr schnell eine maximale, dem zu dämpfenden Stoß entgegenwirkende Gegenkraft auf, die anschließend bis praktisch zum Ende des Dämpfungsvorgangs im wesentlichen gleich bleibt. Somit erhält man ein zunächst im wesentlichen schlagartiges und erst anschließend kontinuierliches Abbremsen der bewegten Masse.

Zum Abbauen des plötzlichen Druckanstiegs im Dämpfungsraum ist der Dämpfungsraum zwar nicht nur über den Drosselquerschnitt sondern auch über eine nach Art eines Druckbegrenzungsventils wirkende Einrichtung mit der Kolbenrückseite verbunden. Dies ändert jedoch wenig an dem ungleichmäßigen Dämpfungsverhalten des Stoßdämpfers, zumal die druckbegrenzende Einrichtung, hat sich der Druck im Dämpfungsraum entsprechend weit abgesenkt, wieder schließt, so daß eine weitere Unstetigkeit auftritt.

Eine vergleichbare Problematik ergibt sich bei dem aus der US-A-4,452,437 bekannten Stoßdämpfer gemäß dem Oberbegriff von Anspruch 1. Dieser weist einen Dämpfungskolben auf, der eine Drosselöffnung mit einer sich konisch verjüngenden Mantelfläche enthält, in die im Betrieb ein Drosselstift eintaucht, der eine konische, eine parabolische oder eine abgestufte Formgebung besitzt.

Die EP-A-0 360 631 beschreibt einen hydropneumatischen Dämpfungszylinder für Kraftfahrzeuge. Er enthält einen Dämpfungskolben mit einer zylindrischen Drosselöffnung, der ein am Boden des Zylinders befestigter Drosselstift zugeordnet ist, der in die Drosselöffnung eintauchen kann. Der Drosselstift hat eine sich nach vorne hin parabolisch verjüngende Gestalt und läuft in einer Spitze aus, die von einem stabförmigen zylindrischen Abschnitt gebildet ist.

Der vorliegenden Erfindung liegt deshalb die Aufgabe zugrunde, einen Stoßdämpfer der eingangs genannten Art mit möglichst stetigem Dämpfungsverhalten zu schaffen.

Diese Aufgabe wird erfindungsgemäß durch die kennzeichnenden Merkmale des Patentanspruches 1 gelöst.

Bei einem in dieser Weise ausgestalteten Stoßdämpfer steigt die sich der bewegten Masse entgegenstellende Gegenkraft nach dem Eintreffen der Drosselöffnung bei dem Drosselstift verhältnismäßig langsam an und erreicht erst allmählich, kurz bevor die Endlage erreicht ist, ihren maximalen Wert. Dies ergibt eine beim Vorbewegen der Bewegungseinheit zunächst langsam und dann schneller kleiner werdende Geschwindigkeit der abzubremsenden Masse. Dabei erfolgt die Geschwindigkeitsabnahme stetig ohne abrupte Änderungen. Somit ergibt sich ein Stoßdämpfer mit stetigem, progressivem Dämpfungsverhalten.

Prinzipiell könnte man daran denken, daß man die gleiche Wirkung auch dann erhält, wenn man anstelle der mindestens bereichsweise stetig gekrümmten Mantelfläche des Drosselstiftes und/oder der Drosselöffnung eine Aufeinanderfolge konischer Bereiche unterschiedlicher Konizität vorsieht. Bei einem solchen Stoßdämpfer würden sich jedoch Unstetigkeiten im Dämpfungsverhalten an den Stellen ergeben, an denen beim Vorbewegen der Bewegungseinheit der den Drosselquerschnitt begrenzende konische Bereich wechselt.

Ausführungsbeispiele der Erfindung werden nun anhand der Zeichnung erläutert. Es zeigen:
- Figur 1: einen erfindungsgemäßen Stoßdämpfer im Längsschnitt, und
- Figur 2: ein Diagramm, in das die Drosselquerschnittsfläche A, die Geschwindigkeit v der abzubremsenden Masse und die die Dämpfung bewirkende Gegenkraft F in Abhängigkeit des zurückgelegten Wegs für einen erfindungsgemäßen Stoßdämpfer in schematischer Weise eingezeichnet sind.

Im dargestellten Falle handelt es sich um einen hydraulischen Stoßdämpfer 1 mit einem Gehäuse 2, das von einem im wesentlichen zylindrischen Rohrstück 3 und zwei das Rohrstück 3 an seinen Stirnseiten verschließenden Abschlußelementen 4, 5 gebildet wird.

In dem Gehäuse 2 ist eine in einer der Längsrichtung des Stoßdämpfers entsprechenden Bewegungsrichtung 6 hin und her verschiebbar geführte Bewegungseinheit 7 angeordnet, die einen Dämpfungskolben 8 aufweist, der an seinem Außenumfang einen gegen das Gehäuse 2 dichtenden Dichtring 9 trägt. Der Dämpfungskolben 8 unterteilt das Gehäuseinnere in einen einerseits des Dämpfungskolbens 8 angeordneten, von der Vorderseite 10 des Dämpfungskolbens 8 begrenzten Dämpfungsraum 11 und in einen andererseits des Dämpfungskolbens 8 angeordneten, von der Rückseite 12 des Dämpfungskolbens 8 begrenzten rückseitigen Gehäuseraum 13. Ausgehend vom Dämpfungskolben 8 erstreckt sich der Dämpfungsraum 11 bis zum einen Abschlußelement 4 und der rückseitige Gehäuseraum 13 bis zum anderen Abschlußelement 5.

Bewegt sich die Bewegungseinheit 7 im Gehäuse 2 in Bewegungsrichtung 6, verändern der Dämpfungsraum 11 und der rückseitige Gehäuseraum 13 ihre Volumina gegensinnig.

Die Bewegungseinheit 7 enthält ferner eine von der Rückseite 12 des Dämpfungskolbens 8 abstehende und koaxial zum rückseitigen Gehäuseraum 13 durch diesen verlaufende Kolbenstange 14, die das Abschlußelement 5 abgedichtet durchsetzt und an ihrem aus dem Gehäuse 2 vorstehenden Ende eine beim Ausführungsbeispiel von einem aufgesetzten Pufferstück 15 gebildete Stoßaufnahmefläche 16 trägt.

Der rückseitige Gehäuseraum 13 ist seinerseits durch einen Druckausgleichskolben 17 in einen zwischen ihm und dem Dämpfungskolben 8 angeordneten Fluid-Aufnahmeraum 18 und einen zwischen ihm und dem Abschlußelement 5 angeordneten Feder-Aufnahmeraum 19 unterteilt. Der Druckausgleichskolben 17 ist relativ zum Gehäuse 2 verschiebbar an diesem gelagert und sitzt verschiebbar auf der Kolbenstange 14. Dabei liegt er über einen stirnseitig an ihm angeordneten Dichtring 20 sowohl am Gehäuse 2 als auch an der Kolbenstange 14 dichtend an. Von der dem Feder-Aufnahmeraum 19 zugewandten Seite des Druckausgleichskolbens 17 steht eine auf der Kolbenstange 14 gelagerte Lagerhülse 21 ab.

Der Druckausgleichskolben 17 ist in Richtung zum Dämpfungskolben 8 hin durch eine Federkraft belastet, die beim Ausführungsbeispiel durch eine im Feder-Aufnahmeraum 19 angeordnete Schraubenfeder 22 erzeugt wird, die sich einerseits am Abschlußelement 5 und andererseits am Druckausgleichskolben 17 abstützt.

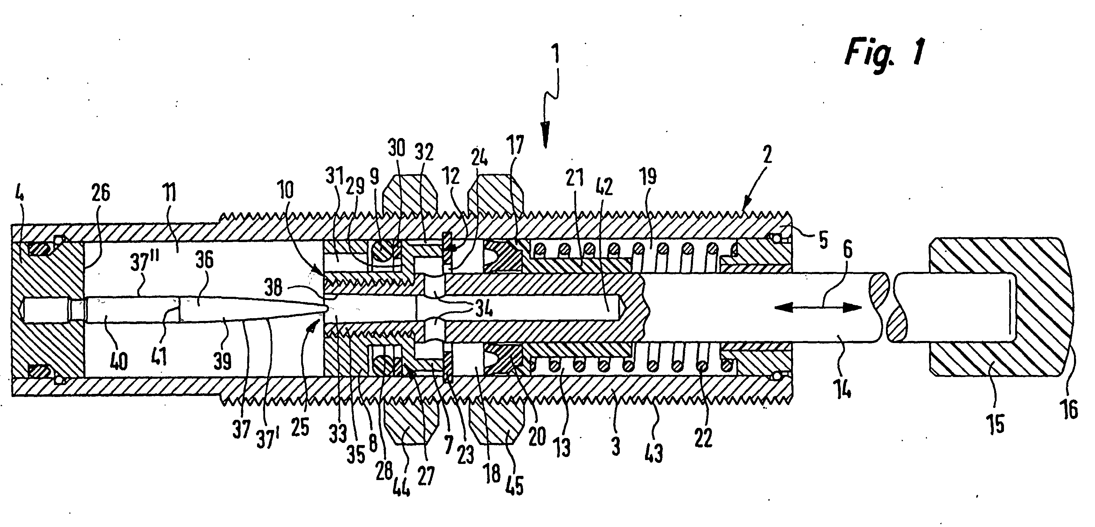

In der aus Figur 1 hervorgehenden Ausgangsstellung weist der Dämpfungskolben 8 seinen größtmöglichen Abstand zum Abschlußelement 4 und der Dämpfungsraum 11 somit sein maximal mögliches Volumen auf. In dieser Ausgangsstellung liegt der Dämpfungskolben 8 an einem gehäusefesten Anschlagkörper 23 an, der im Fluid-Aufnahmeraum 18 angeordnet ist. Der Anschlagkörper 23 wird von einem radial außen am Gehäuse 2 fixierten und radial innen zur Kolbenstange 14 hin einen Ringspalt 24 freilassenden Anschlagring gebildet.

Der Dämpfungsraum 11 und der Fluid-Aufnahmeraum 18 sind durch die von dem Dämpfungskolben 8 und der Kolbenstange 14 gebildete Bewegungseinheit 7 hindurch in noch zu beschreibender Weise miteinander verbunden. Diese Räume sind vollständig mit einem Fluid, insbesondere eine hydraulische Flüssigkeit wie Öl, gefüllt.

Bei seiner Anwendung wird der Stoßdämpfer 1 mit seinem Gehäuse 2 in geeigneter Weise ortsfest beispielsweise an einem Maschinengestell oder am Gehäuse eines Linearantriebes so angebracht, daß die Stoßaufnahmefläche 16 in der Bewegungsbahn einer Masse liegt, die gedämpft abgebremst werden soll. Dabei wird die Kolbenstange 14 parallel zur Bewegungsbahn der abzubremsenden Masse ausgerichtet. Diese Masse kann von einem beliebigen Körper gebildet werden, z.B. von einem beim Eintreffen in eine Endlage gedämpft abzubremsenden Maschinenteil oder dem Abtriebsteil eines Linearantriebes.

Beim Auftreffen der abzubremsenden Masse auf die Stoßaufnahmefläche 16 wird die Bewegungseinheit 7 und somit der Dämpfungskolben 8 zum Abschlußelement 4 hin bewegt. Dabei entfernt sich der Dämpfungskolben 8 von dem Anschlagkörper 23. Hierdurch wird das im Dämpfungsraum 11 enthaltene Fluid aus dem Dämpfungsraum 11 durch die Bewegungseinheit 7 zur Rückseite 12 des Dämpfungskolbens 8, d.h. in den Fluid-Aufnahmeraum 18 verdrängt. Dieses Verdrängen erfolgt durch eine Drosseleinrichtung 25, so daß die Bewegung gedämpft wird. Der Dämpfungsweg entspricht dem Abstand des Dämpfungskolbens 8 von einem gehäusefesten Endanschlag 26 in der in Figur 1 dargestellten Ausgangsstellung. Der Endanschlag 26 wird beim Ausführungsbeispiel von dem Abschlußelement 4 gebildet.

Das hinter den Dämpfungskolben 8 in den Fluid-Aufnahmeraum 18 verdrängte Fluid beaufschlagt den Druckausgleichskolben 17 in Richtung vom Dämpfungskolben 8 weg, so daß er sich unter Vergrößerung des Fluid-Aufnahmeraums 18 entgegen der Kraft der Schraubenfeder 22 zum Abschlußelement 5 hin bewegt. Dabei wird die Schraubenfeder 22 gespannt.

Entfernt sich die gedämpft abgebremste und durch den Endanschlag 26 zum Stillstand gekommene Masse wieder von der Stoßaufnahmefläche 16, wird die Bewegungseinheit 7 nicht mehr von außen her belastet. Die Schraubenfeder 22 schiebt dann den Druckausgleichskolben 17 wieder in die Ausgangsstellung vor. Hierbei wird das Fluid in entgegengesetzter Richtung aus dem Fluid-Aufnahmeraum 18 in den Dämpfungsraum 11 verdrängt, so daß auch die Bewegungseinheit 7 in die Ausgangsstellung zurückbewegt wird.

Damit der Stoßdämpfer 1 seine Ausgangsstellung möglichst schnell wieder erreicht, erfolgt das Verdrängen des Fluids aus dem Fluid-Aufnahmeraum 18 in den Dämpfungsraum 11 hauptsächlich nicht durch die Drosseleinrichtung 25, sondern durch einen von einem zum Fluid-Aufnahmeraum 18 hin schließenden und zum Dämpfungsraum 11 hin öffnenden Rückschlagventil 27 beherrschten Strömungsweg. Hierzu sitzt in einer den Dichtring 9 aufnehmenden Umfangsnut 28 des Dämpfungskolbens 8 zwischen dem Dichtring 9 und der dem Fluid-Aufnahme-raum 18 zugewandten Nutflanke 29 ein Rückschlagring 30. Die Umfangsnut 28 ist einerseits über einen im Dämpfungskolben 8 verlaufenden Längskanal 31 mit dem Dämpfungsraum 11 und andererseits über einen am Umfang des Dämpfungskolbens 8 verlaufenden Ringspalt 32 mit der Rückseite 12 des Dämpfungskolbens 8 und somit mit dem Fluid-Aufnahmeraum 18 verbunden, solange der Dämpfungskolben 8 nicht an dem Anschlagkörper 23 anliegt. Die Umfangsnut 28 weist in Bewegungsrichtung 6 eine mit Bezug auf den vom Dichtring 9 und dem Rückschlagring 30 eingenommenen Platz größere Breite auf, so daß sich der Rückschlagring 30 von der Nutflanke 29 abheben kann, wenn er vom Fluid-Auf-nahmeraum 18 her beaufschlagt wird. Das Zurückströmen des Fluids aus dem Fluid-Aufnahmeraum 18 erfolgt durch den Ring-spalt 24 zwischen der Kolbenstange 14 und dem ringförmigen Anschlagkörper 23, anschließend an der vom Anschlagkörper 23 entfernten Kolbenrückseite 12 an dieser vorbei zum Ringspalt 32 am Umfang des Dämpfungskolbens 8 und dann bei von der Nutflanke 29 abgehobenem Rückschlagring 30 durch die Umfangsnut 28 und den Längskanal 31 in den Dämpfungsraum 11.

Bei der Dämpfungsbewegung, wenn sich der Dämpfungsraum 11 verkleinert, wird der Rückschlagring 30 dagegen vom Dämpfungsraum 11 her beaufschlagt, so daß er an der Nutflanke 29 dicht anliegt.

Zur Drosseleinrichtung 25 gehört eine an der Bewegungseinheit 7 angeordnete Drosselöffnung 33, die einerseits in den Dämpfungsraum 11 mündet und andererseits mit der Rückseite 12 des Dämpfungskolbens 8 verbunden ist. Letzteres erfolgt durch mindestens einen in der Bewegungseinheit 7 hinter der Drosselöffnung 33 angeordneten Querkanal 34.

Die Drosselöffnung 33 verläuft beim Ausführungsbeispiel in einem den Dämpfungskolben 8 durchgreifenden Endabschnitt 35 der Kolbenstange 14, auf dem der Dämpfungskolben 8 beispielsweise durch Aufschrauben festgelegt ist.

Die Drosselöffnung 33 wirkt mit einem Drosselstift 36 zusammen, der sich vom dem Dämpfungskolben 8 entgegengesetzten Ende des Dämpfungsraumes 11 her koaxial zur Drosselöffnung 33 in Bewegungsrichtung 6 erstreckt. Im dargestellten Falle ist der Drosselstift 36 an dem Abschlußelement 4 befestigt. Bewegt sich die Bewegungseinheit 7 aus der Ausgangsstellung zum Endanschlag 26 am Abschlußelement 4 hin, schiebt sich die Drosselöffnung 33 auf den Drosselstift 36, so daß sich zwischen der Mantelfläche 37 des Drosselstiftes 36 und der Mantelfläche 38 der Drosselöffnung 33 ein Ringraum mit kreisringförmigem Querschnitt ergibt (der Drosselstift und die Drosselöffnung weisen Kreisquerschnitte auf). Der flächenmäßig kleinste Querschnitt dieses Ringraums bildet den den Dämpfungsvorgang bestimmenden Drosselquerschnitt.

Dabei ist die Anordnung allgemein so getroffen, daß die Mantelfläche des dem Dämpfungskolben zugewandten Bereichs des Drosselstiftes in Bewegungsrichtung 6 stetig gekrümmt mit vom dem Dämpfungskolben zugewandten Ende her kontinuierlich abnehmender Steigung verläuft, so daß sich der Drosselquerschnitt beim Vorbewegen der Bewegungseinheit 7 in Abhängigkeit des zurückgelegten Weges mit kontinuierlich kleiner werdenden Rate verringert.

Die erwähnte stetige Krümmung der Mantelfläche des Drosselstiftes entspricht zweckmäßigerweise der Krümmung eines Kreisbogens oder einer logarithmischen Kurve.

Bei der aus Figur 1 hervorgehenden Drosseleinrichtung 25 weist der Drosselstift 36 einen dem Dämpfungskolben 8 zugewandten vorderen Bereich 39 mit in der genannten Weise gekrümmt verlaufender Mantelfläche 37' auf, so daß er eine zu seinem freien Ende hin verhältnismäßig spitz zulaufende Gestalt mit leicht ausgebauchter Mantelfläche hat. An diesen vorderen Bereich 39 schließt sich stufenlos ein hinterer Bereich 40 mit zylindrischer Mantelfläche 37'' an. Die Mantelfläche 38 der Drosselöffnung 33 verjüngt sich dagegen von ihrer Mündung her konisch. Ferner ist die Steigung der Mantelfläche 37' des vorderen Drosselstiftbereichs 39, d.h. der Neigungswinkel, um den die Mantelfläche 37' zur axialen Richtung geneigt ist, über die ganze Länge des vorderen Bereichs 39 hinweg zumindest bis zur Übergangsstelle 41 in den hinteren Bereich 40 größer als die Steigung der Mantelfläche 38 der Drosselöffnung 33. An der Übergangsstelle 41 kann - muß jedoch nicht - die Mantelfläche 37' eine der Mantelfläche 38 der Drosselöffnung 33 entsprechende Steigung aufweisen.

Solange beim Aufschieben der Drosselöffnung 33 deren Mündung den hinteren Drosselstiftbereich 40 noch nicht erreicht hat, befindet sich der wirksame Drosselquerschnitt an der Mündung der Drosselöffnung 33. Hier ist die Querschnittsfläche des sich zwischen den Mantelflächen 37' und 38 beim Eintauchen des vorderen Drosselstiftbereichs 39 in die Drosselöffnung 33 ergebenden Ringraums unabhängig von der Eintauchtiefe am kleinsten. Gelangt die Übergangsstelle 41 dann in die Drosselöffnung 33, befindet sich der wirksame Drosselquerschnitt dagegen nicht mehr an der Mündung der Drosselöffnung 33 sondern an der Übergangsstelle 41 und verlagert sich mit fortschreitendem Dämpfungsweg zusammen mit der sich dabei an die Mantelfläche 38 der Drosselöffnung 33 annähernden Übergangsstelle 41.

Der hintere Bereich 40 des Drosselstiftes 36 ist gleich lang oder kürzer als die Drosselöffnung 33.

Die Mantelfläche der Drosselöffnung 33 muß nicht unbedingt konisch sein. Sie könnte auch gekrümmt verlaufen.

Ist der Drosselstift länger als die Drosselöffnung, enthält die Bewegungseinheit 7, beim Ausführungsbeispiel die Kolbenstange 14, eine an die Drosselöffnung anschließende Aufnahmebohrung 42, die den in der Endstellung der Bewegungseinheit über die Drosselöffnung vorstehenden Bereich des Drosselstiftes aufnimmt.

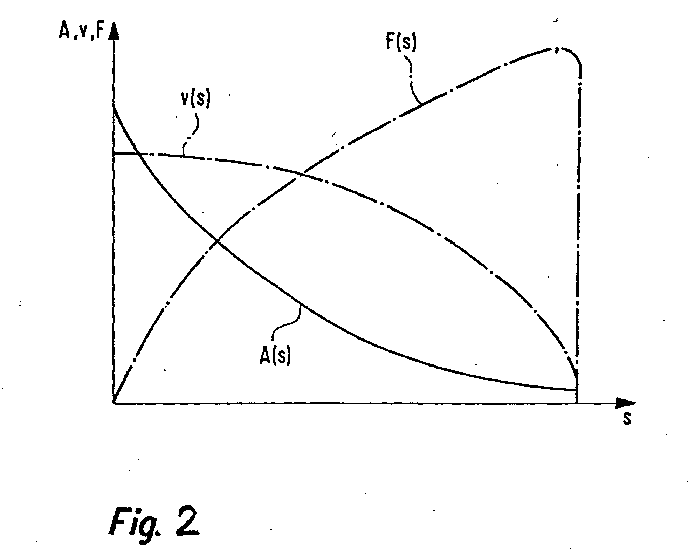

In das Diagramm der Figur 2 ist die sich bei einem erfindungsgemäßen Stoßdämpfer ergebende Abhängigkeit der Fläche A des wirksamen Drosselquerschnitts vom zurückgelegten Dämpfungsweg s schematisch mit einer ausgezogenen Kurve eingezeichnet. Hieraus geht hervor, daß sich der Drosselquerschnitt beim Aufschieben der Drosselöffnung auf den Drosselstift kontinuierlich verringert, und zwar mit kontinuierlich kleiner werdenden Rate, so daß man einen zum Nullpunkt des Diagramms hin eingebauchten Kurvenverlauf erhält.

Aus der strichpunktiert eingezeichneten Kurve, die die Abhängigkeit der vom Stoßdämpfer auf die abzubremsende Masse ausgeübten Gegenkraft vom Dämpfungsweg wiedergibt, ergibt sich, daß die Gegenkraft mit fortschreitendem Dämpfungsweg allmählich zunimmt und erst gegen Ende des Dämpfungswegs ihren Maximalwert erreicht.

Dementsprechend ergibt sich für die Geschwindigkeit v der Bewegungseinheit 7 (doppelstrichpunktierte Kurve) eine kontinuierliche Abnahme, wobei sich die Geschwindigkeit mit kontinuierlich größer werdender Rate verringert.

Der Stoßdämpfer 1 wird, wie bereits erwähnt, mit seinem Gehäuse 2 ortsfest beispielsweise an einem Maschinengestell angebracht. Hierzu trägt beim dargestellten Stoßdämpfer 1 das Rohrstück 3 des Gehäuses 2 ein Außengewinde 43, dem zwei Gewindemuttern 44, 45 zugeordnet sind. Der Stoßdämpfer 1 wird, wobei mindestens eine der Gewindemuttern noch nicht auf das Gehäuse geschraubt ist, durch eine geeignet große Ausnehmung des Maschinengestells oder dergleichen gesteckt, wonach man von beiden Seiten her jeweils eine der Gewindemuttern 44, 45 gegen die dazwischen liegende Partie des Maschinengestells oder dergleichen schraubt, so daß der Stoßdämpfer an dem Maschinengestell oder dergleichen festgespannt ist. Durch Verschrauben des Stoßdämpfergehäuses 2 in den Gewindemuttern läßt sich die Position des Stoßdämpfers verändern.

Anstelle des dargestellten Stoßdämpfers sind auch solche Stoßdämpfer denkbar, die nicht mit ihrem Gehäuse sondern mit ihrer Bewegungseinheit fixiert werden. In einem solchen Falle befindet sich die Stoßaufnahmefläche nicht an der Bewegungseinheit sondern ist mit dem Gehäuse verbunden. Bei einem solchen Stoßdämpfer würde sich das gleiche Dämpfungsverhalten wie oben beschrieben ergeben.

## Patentansprüche

1. Fluidischer Stoßdämpfer, mit einer in einem Stoßdämpfergehäuse in einer Bewegungsrichtung hin und her verschiebbar geführten Bewegungseinheit (7), die einen Dämpfungskolben (8) aufweist, der einen Dämpfungsraum (11) im Gehäuse begrenzt, wobei die Bewegungseinheit (7) eine einerseits in den Dämpfungsraum (11) mündende und andererseits mit der Kolbenrückseite verbundene Drosselöffnung (33) bildet, der ein gehäusefester Drosselstift (36) zugeordnet ist, der sich vom dem Dämpfungskolben (8) entgegengesetzten Ende des Dämpfungsraums (11) her in Bewegungsrichtung erstreckt, so daß sich beim Dämpfungsvorgang die Bewegungseinheit mit ihrer Drosselöffnung (33) auf dem Drosselstift (36) vorbewegt und ein bei der Vorbewegung verringernder Drosselquerschnitt ergibt, **dadurch gekennzeichnet, daß** der Drosselstift (36) einen dem Dämpfungskolben (8) zugewandten vorderen Bereich (39) mit gekrümmt verlaufender Mantelfläche (37') und einen sich hieran anschließenden hinteren Bereich (40) mit zylindrischer Mantelfläche (37'') aufweist, wobei die gekrümmt verlaufende Mantelfläche (37') des Drosselstifts (36) in Bewegungsrichtung (6) stetig gekrümmt mit vom dem Dämpfungskolben (8) zugewandten Ende her kontinuierlich abnehmender Steigung verläuft, und daß die Mantelfläche (38) der Drosselöffnung (33) sich von ihrer Mündung her konisch verjüngt oder gekrümmt verläuft, so daß der Drosselquerschnitt beim Dämpfungsvorgang anfänglich vom vorderen Bereich (39) des Drosselstiftes (36) und der Mündung der Drosselöffnung (33) und anschließend von der Übergangsstelle (41) des vorderen (39) in den hinteren Bereich (40) des Drosselstiftes (36) und der Mantelfläche (38) der Drosselöffnung (33) begrenzt wird, wobei sich der Drosselquerschnitt in Abhängigkeit des zurückgelegten Wegs mit kontinuierlich kleiner werdender Rate verringert.

2. Stoßdämpfer nach Anspruch 1, **dadurch gekennzeichnet, daß** die stetige Krümmung die Krümmung eines Kreisbogens oder einer logarithmischen Kurve ist.

3. Stoßdämpfer nach Anspruch 1 oder 2, **dadurch gekennzeichnet, daß** die Steigung der Mantelfläche (37') des vorderen Bereichs (39) des Drosselstiftes (36) an der Übergangsstelle (41) zum hinteren Bereich (40) des Drosselstiftes (36) gleich oder größer als die Steigung der Mantelfläche (38) der Drosselöffnung (33) an deren Mündung ist.

4. Stoßdämpfer nach einem der Ansprüche 1 bis 3, **dadurch gekennzeichnet, daß** der hintere Bereich (40) des Drosselstiftes (36) gleich lang oder kürzer als die Drosselöffnung (33) ist.

## Claims

1. Fluidic shock absorber, with a movement unit (7) guided slidably to and fro in one direction of movement in a shock absorber housing, having a damping piston (8) which defines a damping chamber (11) in the housing, wherein the movement unit (7) forms a restrictor orifice (33) leading at one end into the damping chamber (11) and connected at the other end to the rear of the piston and to which is assigned a restrictor pin (36) fixed to the housing and extending in the direction of movement from the end of the damping chamber (11) opposite the damping piston (8) so that during the damping process the movement unit with its restrictor orifice (33) moves forward on to the restrictor pin (36) to give a restrictor cross-section which reduces during the forward movement, **characterised in that** the restrictor pin (36) has a front section (39) facing the damping piston (8) with a curved circumferential surface (37'), and an adjoining rear section (40) with a cylindrical surface (37"), wherein the curved circumferential surface (37') of the restrictor pin (36) runs with constant curvature in the direction of movement (6) with an inclination which reduces continuously from the end facing the damping piston (8), and that the circumferential surface (38) of the restrictor orifice (33) runs conically tapered or curved away from its opening, so that the restrictor cross-section during the damping process is defined initially by the front section (39) of the restrictor pin (36) and the opening of the restrictor orifice (33) and subsequently by the transition point (41) between the front (39) and the rear (40) sections of the restrictor pin (36) and the circumferential surface (38) of the restrictor orifice (33), wherein the restrictor cross-section reduces at a rate which declines continuously depending on the distance covered.

2. Shock absorber according to claim 1, **characterised in that** the constant curvature is the curvature of a circular arc or a logarithmic curve.

3. Shock absorber according to claim 1 or 2, **characterised in that** the inclination of the circumferential surface (37') of the front section (39) of the restrictor pin (36) at the transition point (41) to the rear section (40) of the restrictor pin (36) is equal to or greater than the inclination of the circumferential surface (38) of the restrictor orifice (33) at its opening.

4. Shock absorber according to any of claims 1 to 3, **characterised in that** the rear section (40) of the restrictor pin (36) is the same length as or shorter than the restrictor orifice (33).

## Revendications

1. Amortisseur à fluide, avec une unité mobile (7) guidée coulissante dans une direction de mouvement, en étant mobile dans un sens et dans l'autre dans un boîtier d'amortisseur, qui présente un piston d'amortissement (8), lequel limite dans le boîtier une chambre d'amortissement (11), l'unité mobile (7) formant une ouverture d'étranglement (33) débouchant d'un côté dans la chambre d'amortissement (11) et reliée de l'autre côté à la partie arrière du piston, ouverture à laquelle est associée une tige d'étranglement (36), qui s'étend dans la direction du mouvement depuis l'extrémité de la chambre d'amortissement (11) opposée au piston d'amortissement (8), de telle sorte que, lors du processus d'amortissement, l'unité mobile avance avec son ouverture d'étranglement (33) sur la tige d'étranglement (36) et donne lors de son avance une section qui diminue, **caractérisé en ce que** la tige d'étranglement (36) présente une partie avant (39), tournée vers le piston d'amortissement (8), avec une surface latérale d'allure courbe (37') et une partie arrière (40) qui s'y raccorde, avec une surface latérale cylindrique (37"), la surface latérale d'allure courbe (37') de la tige d'étranglement (36) étant courbée uniformément dans la direction du mouvement avec une pente qui décroît continûment depuis l'extrémité tournée vers le piston d'amortissement (8), et **en ce que** la surface latérale (38) de l'ouverture d'étranglement (33) se rétrécit en cône depuis son embouchure ou a une allure courbe, de telle sorte que, lors du processus d'amortissement, la section d'étranglement est limitée au début par la partie avant (39) de la tige d'étranglement (36) et par l'ouverture d'étranglement (33), et ensuite par le point de transition (41) de la partie avant (39) et de la partie arrière (40) de la tige d'étranglement (36) et par la surface latérale (38) de l'ouverture d'étranglement (33), la section d'étranglement se rétrécissant de moins en moins vite en fonction de la course effectuée.

2. Amortisseur selon la revendication 1, **caractérisé en ce que** la courbure uniforme est la courbure d'un arc de cercle ou d'une courbe logarithmique.

3. Amortisseur selon la revendication 1 ou 2, **caractérisé en ce que** la pente de la surface latérale (37') de la partie avant (39) de la tige d'étranglement (36) au point de transition (41) vers la partie arrière (40) de la tige d'étranglement (36) est égale à ou plus grande que la pente de la surface latérale (38) de l'ouverture d'étranglement (33) à son embouchure.

4. Amortisseur selon l'une des revendications 1 à 3, **caractérisé en ce que** la partie arrière (40) de la tige d'étranglement (36) est aussi longue ou plus courte que l'ouverture d'étranglement (33).
